Europäisches Patentamt

European Patent Office

Office européen des brevets

(19)

(11) Publication number: **0 197 622 B1**

# EUROPEAN PATENT SPECIFICATION

(45) Date of publication of patent specification: **17.04.91**

(51) Int. Cl.⁵: **A01N 63/02**, A01N 63/00,
//(A01N63/02,57:14,55:04,47:30,
37:32),(A01N63/00,57:14,55:04,
47:30,37:32)

(21) Application number: **86300272.1**

(22) Date of filing: **16.01.86**

The file contains technical information submitted
after the application was filed and not included in
this specification

(54) **Enhancement of biocide activity.**

(30) Priority: **18.01.85 JP 7147/85**

(43) Date of publication of application:
**15.10.86 Bulletin 86/42**

(45) Publication of the grant of the patent:
**17.04.91 Bulletin 91/16**

(84) Designated Contracting States:
**DE FR GB IT**

(56) References cited:
**GB-A- 2 074 868**
**US-A- 3 911 110**
**US-A- 3 946 107**
**US-A- 4 062 941**

(73) Proprietor: **Kao Corporation**
**14-10, Nihonbashi Kayabacho 1-chome**
**Chuo-Ku Tokyo 103(JP)**

(72) Inventor: **Iwasaki, Tetsuji**
**1247 Saikazaki**
**Wakayama-shi Wakayama(JP)**
Inventor: **Hioki, Yuichi**
**Kao Seiwaryo 1130 Nishihama**
**Wakayama-shi Wakayama(JP)**

(74) Representative: **Bannerman, David Gardner et
al**
**Withers & Rogers 4 Dyer's Buildings Holborn
London, EC1N 2JT(GB)**

Note: Within nine months from the publication of the mention of the grant of the European patent, any person
may give notice to the European Patent Office of opposition to the European patent granted. Notice of opposition
shall be filed in a written reasoned statement. It shall not be deemed to have been filed until the opposition fee
has been paid (Art. 99(1) European patent convention).

**Description**

The invention relates to a biocidal method and a biocide composition. The invention improves the biological effect of a conventional biocide by applying it together with an enhancing agent such as a specified enzyme.

Conventional compositions for enhancing the biological effect of biocides consist chiefly of surfactants. They are especially used together with agricultural/horticultural biocides which are applied to plant stems and leaves e.g. herbicides, bacteriocides, insecticides or miticides. Agricultural/horticultural biocides often cause environmental pollution. When they are used together with a surfactant, which is relatively harmless to the environment however, the quantity and frequency of their use can be reduced although their biological effect is retained. Nevertheless, the surfactants used as the active component in the composition for enhancing the effect of a biocide must be selected carefully in respect of their kind and concentration, because in some cases they are apt to cause drug-induced illness.

US-A-4602941 describes a method of treating fungal infections in animals utilising an antimycotic agent and a fungal cell lytic enzyme to degrade and weaken the fungal cell walls.

EP-A-0129315 discloses a biocidal preparation for controlling slime, bacteria, and fungi in industrial waters which includes a biocide and a polysaccharide-degrading enzyme.

US-A-3911110 describes an insecticide composition in which the effect of the insecticide is enhanced by the presence of the enzyme chitinase.

The present inventors have earnestly studied how to overcome the disadvantages of conventional compositions for enhancing the biological effect of a biocide and have finally attained the present invention based on the finding that an esterase incorporated in an agricultural/horticultural biocide can exhibit an excellent biological effect enhancing its activity against weeds, bacilli and insects irrespective of their kind.

The invention provides a method for enhancing the biological effect of a biocide characterised in that the method comprises the step of applying an esterase to the organism to be killed prior to, or together with the application of the biocide to the organism. The biocide and esterase may be applied to any one of plants, insects , mites, microorganisms or a combination thereof.

There is also provided a composition for enhancing the effect of a biocide characterised in that it contains an esterase.

There is further provided a biocidal composition characterised in that the biocidal composition contains a biocide and an esterase.

There is further provided the use of an esterase, in a composition or in a method as defined above, characterised in that the esterase is derived from a microorganism.

The esterase may be derived from Pseudomonas species.

The esterase may be a lipase or a cutinase.

The esterase may be derived from plant-associated bacilli.

The biocide may be a contact biocide.

The esterase used in this invention may include lipase and cutinase. The lipase may be one originating in animals, vegetables or microorganisms, and preferably one originating in microorganisms from the viewpoint of price and activity. For example, lipase sources may include those originating in the genera Candida, Pseudomonas, Rhizopus, Aspergillus and Mucor. Those originating in the genus Pseudomonas are the most preferable. Commercially available products thereof can be used for the present purpose. Cutinase sources preferably include those originating in plant associated bacilli.

In the practice of this invention, the esterase can be applied to plant stems and leaves or insects prior to the application of the biocide by spraying an aqueous solution of the esterase over them before the application of the biocide. The concentration of the aqueous esterase solution should be at least 0.1 ppm, preferably at least 1 ppm. The time for the subsequent spraying of the biocide need not be specified, and may be decided properly depending on the concentration of the aqueous esterase solution and whether or not the enzyme is deactivated by the biocide. For safety, however, a lapse of at least six hours is generally required for the subsequent spraying.

When the esterase is one which will not be deactivated by a biocide, it is possible to spray the biocide immediately after the aqueous esterase solution has been sprayed, or otherwise it is also possible to spray them together in the form of a composition containing the esterase and the biocide.

The biocides used in this invention include pyrethroid insecticides such as Fenvalerate (α-cyano-3-phenoxybenzyl 2-(4-chlorophenyl)-3-methylvalerate) and Baythroid (cyano(4-fluoro-3-phenoxyphenyl)methyl 3-(2,2-dichloroethenyl)-2,2-dimethylcyclopropanecarboxylate); orgarophosphorus insecticides such as DDVP (2,2-dichlorovinyl dimethyl phosphate), Sumithion (dimethyl 4-nitro-m-tolyl phosphorothionate), Marathon (S-[1,2-bis(ehtoxycarbonyl)ethyl] dimethyl phosphorothiolthionate), Dimethoate (dimethyl S-(N-methylcar-

2

bamoylmethyl) phosphorothiolthionate), Elsan (S-[α-(ethoxycarbonyl)benzyl] dimethyl phosphorothiolthionate) and Baycid (0,0-dimethyl 0-(3-methyl-4-methylmercaptophenyl) thiophosphate); carbamate insecticides such as Bassa (o-butylphenyl methylcarbamate), MTMC (m-tolyl methylcarbamate), Meobal (3,4-dimethylphenyl N-methylcarbamate) and NAC (1-naphthyl N-methylcarbamate); and other insecticides such as Methomyl (methyl-N-[(methylcarbamoyl)oxy]thiocetimide) and cartap (1,3-bis (carbamoylthio)-2-(N,N-dimethylamino)propane hydrochloride).

Miticides include, for example, Sumite (2-(p-tert-butylphenoxy)isopropyl 2-chloroethyl sulfide), Acricid (2,4-dinitro-6-se-butylphenyl dimetylacrylate), Chlormite (isopropyl 4,4-dichlorobenzilate), Akar (ethyl 4,4-dichlorobenzilate), Kelthane (1,1-bis(p-chlorophenyl)-2,2,2-trichloroethanol), Citrazon (ethyl O-benzoyl-3-chloro-2,6-dimethoxybenzohydroxamate), plictran (tricyclohexyltin hydroxide), and Omite (2-(p-tert-butylphenoxy)cyclohexyl 2-propinyl sulfite).

Bacteriocides include, for example, organophosphorus bacteriocides such as Dithane (zinc ethylenebisdithiocarbamate), Manneb (manganese ethylenebisdithiocarbamate) and Thiram (bis(dimethylthiocarbamoyl) disulfide), and other bactericides such as Benlate (methyl 1-(butylcarbamoyl)-2-benzimidazolecarbamate), Difolatan (N-tetrachloroethylthio-4-cyclohexane-1,2-dicarboxyimide), Daconol (tetrachloroisophthalonitrile), Pansoil (5-ethoxy-3-trichloromethyl-1,2,4-thiadiazole), Thiophanate-methyl (1,2-bis(3-methoxycarbonyl-2 thioureido)benzene), Rabcide (4,5,6,7-tetrachlorophthalide), Kitazin P (O,O-diisopropyl S-benzyl phosphorothioate), Hinosan (O-ethyl S,S-diphenyl dithiophosphate), Brobenazol (3-allyloxy-1,2-benzothiazole 1,1-dioxide).

Herbicides include, for example, Stam (3,4-dichloropropionanilide), Satan (S-(4-chlorobenzyl) N,N-diethylchiolcarbamate), Lasso (2-chloro-2',6'-diethyl-N-(methoxymethyl)acetanilide), Glyphosate (N-(phosphonomethyl)glycine isopropylamine salt), DCMU (3-(3,4-dichlorophenyl)-1,1-dimethylurea), and Gramoxon (1,1'-dimethyl-4,4'-dipyridinium dichloride).

Plant growth control agents include, for example, MH (maleic hydrazide) and Ethrel (2-chloroethylphosphonic acid).

Fenvalerate, Baythroid, Suminthion, Marathan, Diomethoate, Elsan, Baycil, Bassa, Meobal, Methomyl, Cartap, Sumite, Acricid, Chlormite, Kelthane, Citrazon, Plictran, Omik, Dithane, Manneb, Thiram, Benlate, Difolaton, Daconol, Pansoil, Rabcibe, Kitazin, Hinosan, Stam, Sutan, Lasso, Gremoxon and Ehtrel are all Trade Marks.

The biocide need not be limited in its form, it may be an emulsion, a hydrate or a flowable preparation, for instance. It can be used together with a surfactant which is effective and does not cause drug-induced illness as an enhacing agent, so that its effect is outstandingly enhanced.

The reason why the biocidal method of this invention brings about an outstanding biocidal effect may be explained by the following postulated mechanism.

The outer skins of plants and insects are covered with waxy layers including esters derived from higher fatty acids and alcohols, which play a role in protecting their tissue from external physical and chemical stimulation. When a biocide is sprayed onto plants or insects no more than by 20 to 30% will penetrate into the inside tissues of plants or insects. Moreover, the sprayed biocide is apt to be washed away, for instance through rainfall, and thus is unable to display its own biological effect.

In this invention, the esterase used to enhance the effect of the biocide is incorporated in the biocide decomposes the foliar wax of plants or the epidermal wax of insects, destroying the wax structure, so that the biocide can penetrate and be prevented from being washed away through for example rainfall, thus its biocidal effect can be increased.

Examples:

The enhancement of biological effect in this invention will now be illustrated by the following examples.

Example 1:

Powdery lipase from Pseudomonas bacteria) was dissolved in water until its concentration reached 10, 103 and 1,000 ppm, respectively, and each solution was sprayed over livid amaranth weeds (6 cm in height) which had been grown up to a tetrafoliate stage. After 24 hours, a 400-fold diluted solution of an 80% DCMU (Karmex D) hydrate was sprayed over the weeds to a concentration of effective ingredients of 20 g/are per pot. After 10 days, the weeds grown above the ground were weighed, and the herbicidal power was represented by the percentage of withered weeds against those grown on the non-sprayed zone. The result is shown in Table 1.

## Table 1

|  |  | Lipase concentration (ppm) | | | |
|  |  | 0 | 10 | 100 | 1000 |
|---|---|---|---|---|---|
| 400-fold diluted solution of 80% DCMU hydrate | 0 | 0 | 0 | 0 | 0 |
| | 20 g/are (effective ingredient) | 48.5 | 90.7 | 95.7 | 98.0 |

Figures show herbicidal power by percentage.

Example 2:

Powdery lipase(from Pseudomonas bacteria) was dissolved to a concentration of 10, 100 and 1,000 ppm in water. An 80% DCMU hydrate was diluted 400-fold with the above dilute solution. The solution was sprayed over livid amaranth weeds (6 cm in height) which had been grown up to a tetrafoliate stage so that the concentration of effective ingredient was 20 g/are and 40 g/are. After 10 days, the weeds grown above the ground were weighed, and the herbicidal power was represented by the percentage of withered weeds against those grown on the non-sprayed zone. The result is shown in Table 2.

## Table 2

|  |  | Lipase concentration (ppm) | | | |
|  |  | 0 | 10 | 100 | 1000 |
|---|---|---|---|---|---|
| 400-fold diluted solution of 80% DCMU hydrate | 0 | 0 | 0 | 0 | 0 |
| | 20 g/are (effective ingredient) | 48.0 | 91.0 | 95.4 | 98.2 |
| | 40 g/are (effective ingredient) | 67.9 | 100 | 100 | 100 |

Figures show herbicidal power by percentage.

Example 3:

Powdery cutinase originating in Colletotrichum bacteria was dissolved in water until its concentration reached 1, 10 and 100 ppm, and a 50% Sumilex hydrate was diluted 1,500-fold with the above dilute

4

solution. The solution was subsequently sprayed over cucumber stems and leaves in a tetrafoliate stage in an amount of 10 mℓ per pot. Immediately after, and 24 hours after the spraying, a suspension of grey mold spores was sprayed to cause infection, and the rate of extermination was determined Separately, an artificial rainfall (20 mm) was applied to the plants immediately after, and 24 hours after the aforesaid spraying of the diluted solution. After the artificial rainfall, a suspension of grey mold spores was sprayed to cause infection, and the rate of extermination was determined by counting the number of spots occurring on the plant stems and leaves and calculating the percentage of the spots against those occurring on the non-sprayed zone. The result is shown in Table 3.

## Table 3

| | Time when spore suspension was sprayed | Cutinase concentration (ppm) | | | |
|---|---|---|---|---|---|
| | | 0 | 1 | 10 | 100 |
| No artificial rainfall was applied | Immediately after the solution was sprayed | 81 | 90 | 100 | 100 |
| | 24 hours after the solution was sprayed | 79 | 92 | 100 | 100 |
| Artificial rainfall applied (20 mm) | Immediately after the solution was sprayed, artificial rainfall was applied, and subsequently spore suspension was sprayed | 48 | 50 | 56 | 60 |
| | 24 hours after the solution was sprayed, artificial rainfall was applied, and subsequently spore suspension was sprayed | 65 | 82 | 92 | 97 |

Figures show average rate of extermination (%) per 10 pots.

EP 0 197 622 B1

Example 4:

Powdery lipase (from Enterobacterium) was dissolved in water until its concentration reached 1, 10 and 100 ppm, and a 50% Plictran hydrate was diluted 2,000 fold with this enzyme solution. The diluted solution was sprayed over haricot bean plants grown to hexa- to hepta-foliate stage in an amount of 20 mℓ per pot. 12 hours after the spraying, 30 female imagos of tetranychus mite were inoculated on each plant. After three days, the surviving mites were counted, and the miticidal rate was determined by comparison with the number of mites surviving on the non-sprayed zone.

The result is shown in Table 4.

## Table 4

| | | Lipase concentration (ppm) | | | |
|---|---|---|---|---|---|
| | | 0 | 1 | 10 | 100 |
| 2,000-fold diluted solution of 50% Plictran hydrate | 0 | 0 | 0 | 0 | 0 |
| | Sprayed 20 mℓ /pot | 48 | 78 | 90 | 100 |

Figures show miticidal rate (%) in comparison with non-sprayed zone.

Example 5:

Powdery cutinase (from Botrytis fungi) was dissolved in water until its concentration reached 1, 10 and 100 ppm, and a 40% Sumithion hydrate was diluted 1,000-fold with this solution. The diluted solution was sprayed in an amount of 20 mℓ over 50 imagos of green rice leaf hopper kept in an insect breeding box. After two days, dead insects were counted, and the insecticidal rate (%) was determined by comparison with the non-sprayed zone. The result is shown in Table 5.

## Table 5

| | | Cutinase concentration (ppm) | | | |
|---|---|---|---|---|---|
| | | 0 | 1 | 10 | 100 |
| 1,000-fold diluted solution of 40% Sumithion hydrate | 0 | 0 | 0 | 0 | 0 |
| | 20 mℓ | 64 | 90 | 95 | 100 |

Figures show insecticidal percentage (%) in comparison with non-sprayed zone.

Example 6

40 parts by weight of the original body of DCMU, 4 parts by weight of cutinase powder originating in Collectotrichum, 8 parts by weight of diethanol amine salt of a polyoxyethylene-alkyl phosphate and 48 parts by weight of clay were mixed together to produce a DCMU hydrate. It was diluted 400 times with water. It was then sprayed in an amount of 20 grams of the effective component per are over amaranth weeds which have grown up to 6 cm height. In 10 days, the weight of the living weeds above the ground was measured. Herbicidal power was calculated in terms of the percentage of withered weeds to that of the non-treated weeds. An 80 percent DCMU, being available with a tradename of Karmex D, was used as a control. Results are shown in Table 6.

**Table 6**

|  | dilution | herbicidal power |
|---|---|---|
| Example 6 (the invention) | x 400 | 90.4 |
| control | x 800 | 37.2 |

Example 7

45.5 g of Karmex D, a conventional herbicide, 4,5 g of sodium salt of formalin condensate with naphthalene sulfonic acid, having a condensation degree of 4, 50 g of water and 180 g of glass beads (medeia) were mixed with each other at a volume ratio of glass beads to the dispersion of 50:50. The mixture was ground with a sand grinder, with an inner volume of 400 ml, at a disk-peripheral velocity of 6 m/sec, at 20 to 25° c, for 3 hours. By filtration under a pressure, 68 g of fine powder of Karmex D was obtained.

The size distribution of the obtained fine Karmex D (DCMU) is shown in Table 7, showing that 95 wt.% of the powder had a size of not larger than 0.5 micron.

Table 7

| particle size | distribution (wt.%) |
|---|---|
| larger than 0.5 micron | 5 |
| 0.5 to 0.2 | 84 |
| 0.2 to 0.1 | 10 |
| 0.1 to 0.05 | 1 |
| not larger than 0.05 | 0 |

Powder of lipase enzyme, from Pseudomonas bacteria, was dissolved in water at concentrations of 10 and 100 ppm, respectively. Further the DCMU dispersion was diluted with the respective lipase solutions. The obtained dilution liquid was sprayed over livid amaranth weeds which had been grown up to the tetrafoliate stage, having 6 cm height, in an amount of 20 g/are as the effective ingredient. In 10 days, the weeds grown above the ground were weighed and herbicidal power was calculated in comparison with the non-treated zone. Results are shown in Table 8.

Table 8

| | | lipase content (ppm) | | |
|---|---|---|---|---|
| | | 0 | 10 | 100 |
| fine powder of DCMU | 0 | 0 | 0 | 0 |
| | 10 g/are | 69.4 | 91.4 | 100 |
| DCMU hydrate (20 micron size) | 10 g/are | 30.2 | 62.1 | 87.3 |

**Claims**

1. A method for enhancing the biological effect of a biocide characterised in that the method comprises the step of applying an esterase to the organism to be killed prior to, or together with, the application of the biocide to the organism.

2. A composition for enhancing the effect of a biocide characterised in that it contains an esterase.

3. A biocidal composition characterised in that the biocidal composition contains a biocide and an esterase.

4. The use of an esterase, in a composition or in a method according to any preceding claim, characterised in that the esterase is derived from a microorganism.

5. The use of an esterase according to Claim 4 characterised in that the esterase is derived from Pseudomonas species.

6. The use of an esterase according to Claim 4 characterised in that the esterase is a lipase or a cutinase.

7. The use of an esterase according to Claim 4 characterised in that the esterase is derived from plant associated bacilli.

8. A biocidal method for enhancing the effect of a biocide according to Claim 1 characterised in that biocide and esterase are applied to any one of plants, insects,mites, microorganisms or a combination thereof.

9. A method for enhancing the biological effect of a biocide according to Claim 1 characterised in that the biocide is a contact biocide.

10. A method for enhancing the effect of a biocide according to Claim 1 characterised in that the esterase is applied in the form of an aqueous solution with a concentration of at least 0.1 ppm of esterase.

**Revendications**

1. Procédé pour augmenter l'effet biologique d'un biocide, caractérisé en ce qu'il comprend l'application d'une estérase à l'organisme à tuer, avant ou en même temps que l'application du biocide audit organisme.

2. Composition pour augmenter l'effet d'un biocide, caractérisée en ce qu'elle contient une estérase.

3. Composition biocide, caractérisée en ce qu'elle contient un biocide et une estérase.

4. Utilisation d'une estérase, dans une composition ou dans un procédé selon l'une quelconque des revendications précédentes, caractérisée en ce que l'estérase provient d'un microorganisme.

5. Utilisation d'une estérase selon la revendication 4, caractérisée en ce que l'estérase provient de l'espèce Pseudomonas.

6. Utilisation d'une estérase selon la revendication 4, caractérisée en ce que l'estérase est une lipase ou une cutinase.

7. Utilisation d'une estérase selon la revendication 4, caractérisée en ce que l'estérase provient de bacilles associés aux plantes.

8. Procédé biocide pour augmenter l'effet d'un biocide, selon la revendication 1, caractérisé en ce que biocide et estérase sont appliqués à des plantes, des insectes, des acariens, des microorganismes ou une de leurs combinaisons.

9. Procédé pour augmenter l'effet biologique d'un biocide, selon la revendication 1, caractérisé en ce que le biocide est un biocide de contact.

10. Procédé pour augmenter l'effet d'un biocide, selon la revendication 1, caractérisé en ce que l'estérase est appliquée sous forme d'une solution aqueuse à une concentration d'au moins 0,1 ppm d'estérase.

**Ansprüche**

1. Verfahren zum Verstärken der biologischen Wirkung eines Biozids, dadurch gekennzeichnet, daß bei dem Verfahren eine Esterase auf einen abzutötenden Organismus vor oder zusammen mit der Anwendung des Biozids auf den Organismus angewendet wird.

2. Zusammensetzung für die Verstärkung der Wirkung eines Biozids, dadurch gekennzeichnet, daß sie eine Esterase enthält.

3. Biozidale Zusammensetzung, dadurch gekennzeichnet, daß die biozidale Zusammensetzung ein Biozid und eine Esterase enthält.

4. Verwendung einer Esterase in einer Zusammensetzung oder bei einem Verfahren nach einem der vorhergehenden Ansprüche, dadurch gekennzeichnet, daß die Esterase von einem Mikroorganismus abgeleitet ist.

5. Verwendung einer Esterase nach Anspruch 4, dadurch gekennzeichnet, daß die Esterase von der Pseudomonas species abgeleitet ist.

6. Verwendung einer Esterase nach Anspruch 4, dadurch gekennzeichnet, daß die Esterase eine Lipase oder Kutinase ist.

7. Verwendung einer Esterase nach Anspruch 4, dadurch gekennzeichnet, daß die Esterase von mit Pflanzen assoziierten Bazillen abgeleitet ist.

8. Biozidales Verfahren zur Verstärkung der Wirkung eines Biozids nach Anspruch 1, dadurch gekennzeichnet, daß das Biozid und die Esterase auf Pflanzen, Insekten, Milben, Mikroorganismen oder deren Kombination angewandt werden.

9. Verfahren zur Verstärkung der biologischen Wirkung eines Biozids nach Anspruch 1, dadurch gekennzeichnet, daß das Biozid ein Kontaktbiozid ist.

10. Verfahren zur Verstärkung der Wirkung eines Biozids nach Anspruch 1, dadurch gekennzeichnet, daß die Esterase in Form einer wässrigen Lösung mit einer Konzentration von wenigstens 0,1 ppm Esterase angewandt wird.